# EUROPEAN PATENT APPLICATION

(11) **EP 1 571 546 A1**
(43) Date of publication of application: **07.09.2005**
(21) Application number: 03772780.7
(22) Date of filing: 14.11.2003
(51) Int. Cl.: G06F 7/58

(54) **RANDOM NUMBER GENERATOR**

(30) Priority: 15.11.2002 JP 2002331884
(71) Applicant: SANYO ELECTRIC CO., LTD., Osaka-fu 570-8677 (JP); Kabushiki Kaisha Suri Sekkei Kenkyusho, Gumma 371-0816 (JP)
(72) Inventor: ONAYA, Masato, Sanyo Electric Co., Ltd., Moriguchi City, Osaka 570-8677 (JP); TAMAKI, Haruro, KK Suri Sekkei Kenkyusho, Maebashi-shi, Gunma 371-0816 (JP); IKETANI, Akira, Sanyo Semicon Device Co., Ltd., Taito-ku, Tokyo 110-0005 (JP)
(74) Representative: Cross, Rupert Edward Blount
(86) International application number: PCT/JP2003/014517
(87) International publication number: WO 2004/046912

(57) **Abstract**

A random number generator comprising a plurality of pseudo random number generating units that can respectively output random numbers in specified pseudo random number systems, an output random number generating unit that generates output random numbers based on outputs from a plurality of pseudo random number generating units, a physical random number generator that generates physical random numbers, and a switching unit for switching between the necessity and the non-necessity of updating output values from pseudo random number generating units based on physical random numbers generated by the physical random number generator. Based on which pseudo random number system an output random number is generated is randomly switched based on a physical random number, making it very difficult to predict a random number compared with a conventional one.

## Description

### Field of the Invention

The present invention relates to a random number generator, and particularly to a random number generator suitable for an encryption algorithm.

### Description of the Related Art

With encryption algorithms, a random number is often used to ensure security. As a random number in this case, generally speaking a pseudo-random number is used that is typified by an M-sequence (Maximum Length Code) or the like. M-sequence code can be generated using a known linear shift register code generator. Also, as a random number other than the above described pseudo-random number, there is known a physical random number generated using natural phenomena such as the fact that nuclear decay is random, or electrical noise. In encryption algorithms also, there are also cases where this physical random number is used instead of the above described pseudo-random number (for example, Japanese Patent Laid-open No. 2000-66592).

However, a pseudo-random number typified by an M-sequence is not a random number having a high margin of safety, and is therefore not preferred from the point of view of ensuring security. Since a pseudo-random number is generated from a fixed arithmetic process or combination of functions, if the same initial conditions exist, there is a possibility that the same random number will be generated. Also, since a physical random number is generally a faint signal, in order to be used with an encryption algorithm it is normally amplified to a usable level using an amplifier. However, an amplifier can be affected by electrical and magnetic fields, and a random number generation rate is operated on by these intentional impressions, and margin of safety may be adversely reduced.

### Disclosure of the Invention

A random number generator of the present invention comprises a plurality of pseudo-random number generating unit capable of respectively outputting random numbers of a fixed pseudo-random number sequence, output random number generating unit capable of generating an output random number based on output of the plurality of pseudo-random number generating unit, physical random number generating unit for generating a physical random number, and switching unit for, in generation of an output random number in the output random number generating unit, switching whether or not a pseudo-random number generated by at least one of the pseudo-random number generating unit is used based on a physical random number generated by the physical random number generating unit. Specifically, according to the above described random number generator of the present invention, since a pseudo-random number constituting a source of an output random number among a plurality of pseudo-random number sequences is varied based on a physical random number, it is possible to reduce predictability of a random number compared to a related art random number generator that used only a pseudo-random number. Also, since a physical random number is not used as a direct output random number, it becomes difficult to predict the output random number compared to a related art device, even if some operation is applied to the physical random number generating unit from outside.

With the above described random number generator of the present invention, it is also possible for the switching unit to be configured so as to switch whether or not a clock signal is input to at least one of the pseudo-random number generating unit based on the physical random number. With this configuration, whether or not a new pseudo-random number is output from a pseudo-random number generating unit is switched by switching whether or not a clock signal is input to that pseudo-random number generating unit.

Also, with the above described random number generator of the present invention, it is also possible to have a configuration where the physical random number generated by the physical random number generating unit is input as at least one of the above described pseudo-random number generating unit clock signal With this configuration, whether or not a new random number is output from a pseudo-random number generating unit is switched by switching the physical random number output value as the clock signal. In this case, the physical random number generating unit functions as the switching unit.

Also, with the above described random number generator of the present invention, it is possible for the switching unit to be configured so as to switch whether or not a pseudo-random number generated by at least one of the pseudo-random number generating unit is input to the output random number generating unit based on the physical random number. With this configuration, whether or not a pseudo-random number generated by at least one of the pseudo-random number generating unit is input to the output random number generating unit is switched by the switching unit.

### BRIEF DESCRIPTION OF THE DRAWINGS

Fig. 1 is a structural drawing of a random number generator of a first embodiment of the present invention.
Fig. 2 is a structural drawing of a physical random number generator used in a random number generator of the first embodiment of the present invention.
Fig. 3 is a structural drawing of a random number generator of a second embodiment of the present invention.
Fig. 4 is a structural drawing of a random number generator of a third embodiment of the present invention.
Fig. 5 is a structural drawing of a random number generator of a fourth embodiment of the present invention.

### DETAILED DESCRIPTION OF THE PREFERRED EMBODIMENTS

### First Embodiment

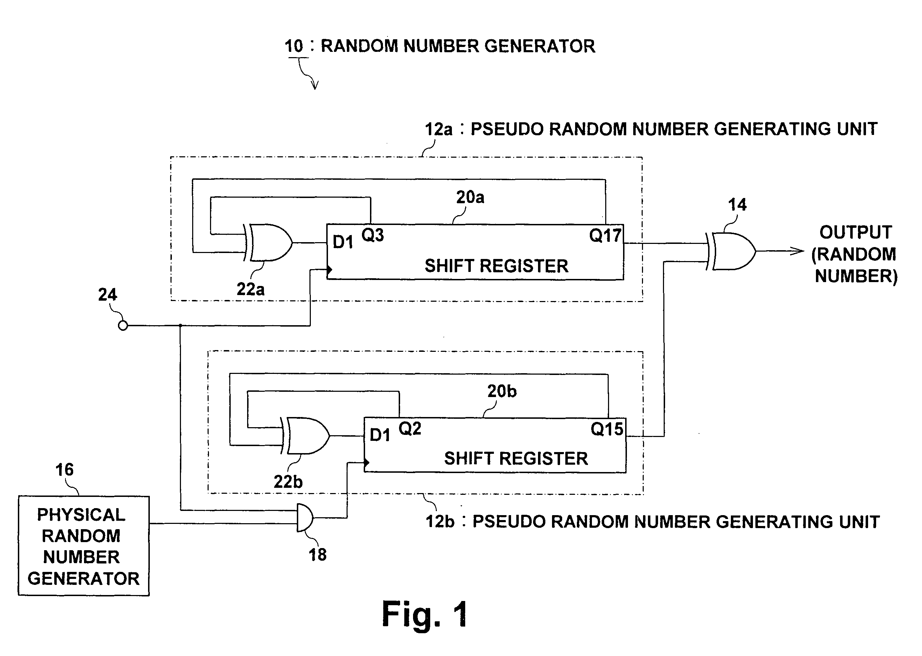

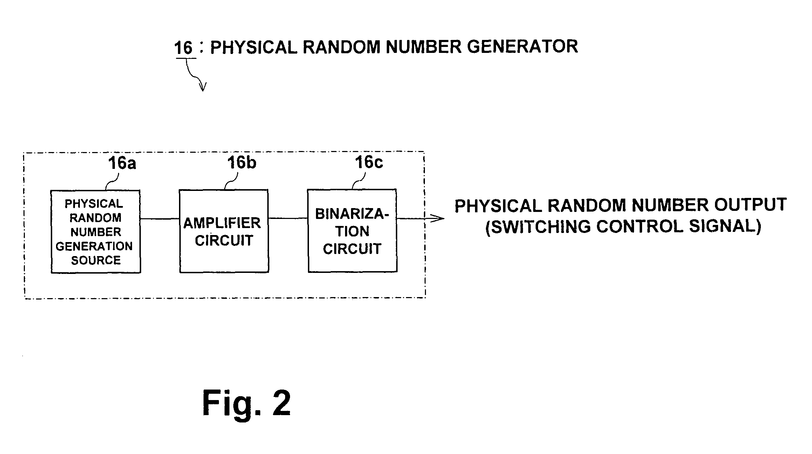

Fig. 1 is a drawing showing the structure of a random number generator 10 of this embodiment, and Fig. 2 is a structural drawing of a physical random number generator 16. The random number generator 10 is comprised of two pseudo-random number generating units 12a and 12b, an output random number generating unit 14, a physical random number generating unit 16, and a switching unit 18. Of these components, the pseudo-random number generating units 12a and 12b respectively comprise shift registers 20a, 20b including a plurality of flip-flops that are successively connected, and EXOR gates 22a, 22b for outputting an exclusive-OR of output values from a specified plurality of tap positions, and are configured as linear shift register code generators for outputting a random number of a specified M-sequence. With the example of Fig. 1, the shift register 20a has 17 flip-flops, is a 17 stage shift register for performing bit shift in response to a clock signal, and generates a feedback input value (D1 input of the shift register 20a: "1" (high level) or "0" (low level)) based on tap outputs from a 3rd flip-flop and a 17th flip-flop (Q outputs: Q3, Q17), from the input side. Also, the shift register 20b has 15 flip-flops, is a 15 stage shift register for performing bit shifting in response to a clock signal, and generates a feedback input value based on tap outputs from a 2nd flip-flop and a 15th flip-flop (Q2, Q15), from the input side. The number of stages and tap positions constituting sources for the feedback input are different for the shift register 20a and the shift register 20b, and the pseudo-random number generating units 12a and 12b can generate different M-sequence codes.

With this embodiment, a clock signal for driving the pseudo-random number generating unit 12a (clock signal for the shift register 20a to perform bit shift) is directly input from a signal source 24, but the clock signal for the pseudo-random number generating unit 12b (shift register 20b) is input from the signal source 24 via a switching unit 18. The switching unit 18 switches whether or not a clock signal is input to the pseudo-random number generating unit 12b based on a physical random number output from the physical random number generator 16. With the example of Fig. 1, the switching unit 18 is configured as an AND gate, and makes the value of a shared clock signal input to the pseudo-random number generating unit 12b (that is, an output value) "1" only when the value of a shared clock signal from the signal source 24 is "1" and the physical random number output value is "1". Since the pseudo-random number generating unit 12b only outputs a new pseudo-random number when the input clock signal value is "1" (high level), a pseudo-random number generated by the pseudo-random number generating unit 12b is only input to the output random number generating unit 14 when the physical random number output value is "1", while on the other and, when the physical random number output value is "0" that output value becomes fixed at the value of a bit connected to that output line (with the example of Fig. 1, the Q15 output of the 15th bit: "1" or "0").

Then, in the output random number generating unit 14, an output random number is generated based on the output values of the two pseudo-random number generating units 12a and 12b. With the example of Fig. 1, the output random number generating unit 14 is configured as an EXOR gate, and sets the output value to "1" when the output values from the pseudo-random number generating units 12a and 12b do not match, but sets the output value to "0" when the output values do match. As has been described above, when the physical random number output value is "1", the output value of the pseudo-random number generating unit 12b becomes a pseudo-random number, while when the physical random number output value is "0", the output value of the pseudo-random number generator 12b is set to "1" or "0". Specifically, when the physical random number output value is "1", the output random number of the output random number generating unit 14 is generated based on the pseudo-random numbers generated by the two pseudo-random number generating units 12a and 12b, while when the physical random number output value is "0", it is generated based on the pseudo-random number generated by the pseudo-random number generating unit 12a. Namely, according to this embodiment, which pseudo-random number is used to generate an output number is changed at random using a physical random number, and compared to a conventional physical random number or pseudo-random number it is extremely difficult to predict. Also, with this embodiment, since different pseudo-random numbers are generated using a plurality of pseudo-random number generating units 12a, 12b, it is also difficult to predict the output random number itself that is generated based on the two of these plurality of pseudo-random number generating units 12a and 12b, and as a result, predicting the output random number is extremely difficult.

The physical random number generator 16 is provided with a physical random number source 16a, an amplifier circuit 16b and a binarizing circuit 16c. Of these components, the physical random number source 16a generates a signal that varies randomly based on a natural phenomenon, and can include, for example, as disclosed in patent publication 1 described above, a semiconductor element for generating a noise signal generated in a current path containing junctions. This is not limiting, however, and it is also possible to use something that utilizes the decay of a radioactive material etc. as this physical random number source 16a. A signal generated in the physical random number source 16a is amplified by the amplifier circuit 16b, and then subjected to binarization processing in the binarization circuit 16c. The binarization circuit 16c compares amplitude of the amplified signal and a specified threshold, at a specified sampling timing, and, for example, outputs "1" of the amplitude of the amplified signal is higher than the specified threshold, and outputs "0" when the amplitude is lower than the threshold. In this way, a physical random number output value for a specified voltage representing "1" or "0" is generated by the physical random number generator 16. The threshold level of the binarization circuit 16c can be set arbitrarily, but is normally set so that the generation probability for "1" and "0" is almost 1:1. In the binarization circuit 16c, it is also possible to simply compare the amplitude of the amplified signal with a specified threshold, to generate an output signal.

### Second Embodiment

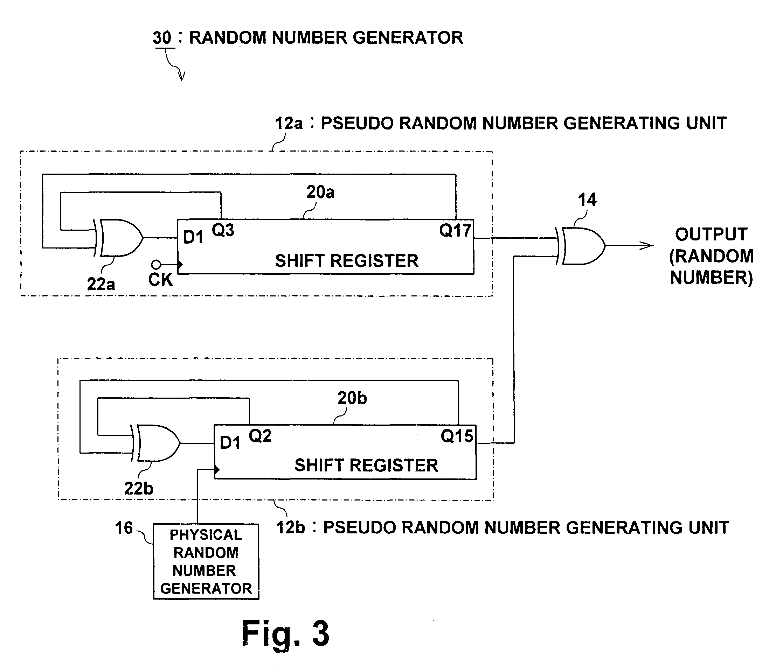

Fig. 3 is a drawing showing the structure of a random number generator 30 of a this embodiment. Here, structural elements that are the same as in the above-described embodiment have the same reference numerals, and description of duplicate sections is omitted.

With the above described first embodiment, a logical AND of a physical random number output from the physical random number generator 16 and a shared clock signal from the signal source 24 is input to the pseudo-random number generating unit 12b as a clock signal, but with this embodiment a clock signal to the pseudo-random number generating unit 12b is actually the physical random number output from the physical random number generator 16. With this embodiment, the physical random number generator 16 is equivalent to a switching unit. The clock signal CK of the pseudo-random number generating unit 12a is input independently from the physical random number output. With this structure also, the same effects as with the first embodiment are obtained. Specifically, when the physical random number output value is "1", the pseudo-random number generating unit 12b sequentially generates a pseudo-random number at the output timing of the physical random number output (sampling timing of the physical random number generator 16), and outputs this random number to the output random number generating unit 14.

On the other hand, when the physical random number output is "0", the pseudo-random number generating unit 12b is not driven, and the output value is fixed to the value of a bit connected to an output line (in Fig. 3, the Q15 output of the 15th bit:"1" or "0"). Specifically, when the physical random number output value is "1", a pseudo-random number is output from the pseudo-random number generating unit 12b in response to the clock signal, and when the physical random number output value is "0" the pseudo-random number is not output but is in a state fixed to an output value. In each of these states, an output random number output from the output random number generating unit 14 is the same as with the first embodiment described above. With this embodiment also, similarly to the first embodiment, which pseudo-random number is used to generate an output number is changed at random using a physical random number, and compared to a conventional physical random number or pseudo-random number it is extremely difficult to predict. It is also possible for the physical random number generator to not output at the sampling timing, but to be configured to output at an arbitrary timing.

### Third Embodiment

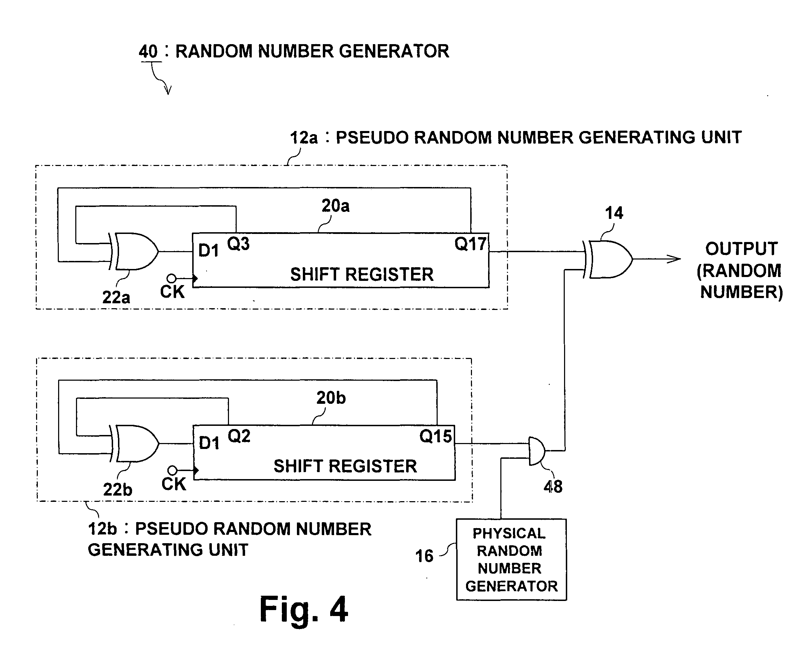

Fig. 4 is a drawing showing the structure of a random number generator 40 of this embodiment. Here, structural elements that are the same as in the above-described embodiment have the same reference numerals, and description of duplicate sections is omitted.

With this embodiment, whether or not a pseudo-random number generated by the pseudo-random number generating unit 12b is input to the output random number generating unit 14 is controlled using a switching unit 48. With the example of Fig. 4, output of the pseudo-random number generating unit 12b is input to the output random number generating unit 14 via a switching unit 48 configured as an AND gate. In the switching unit 48, a logical AND of the physical random number output from the physical random number generator 16 and the output of the pseudo-random number generating unit 12b is acquired, and this logical AND is input to the output random number generating unit 14. Specifically, when the physical random number output value is "1", the pseudo-random number generated by the pseudo-random number generating unit 12b is input as is to the output random number generating unit 14, the output random number generating unit 14 acquires an exclusive OR of the pseudo-random numbers of the two pseudo-random number generating units 12a and 12b, and outputs this as an output random number. On the other hand, when the physical random number output value is "0", "0" is input to the output random number generating unit 14, and an output random number having the same value as the output value of the pseudo-random number generating unit 12a (namely the pseudo-random number output from the pseudo-random number generating unit 12a) is output from the output random number generating unit 14. With this embodiment also, when the physical random number output value is "1", a pseudo-random number is output from the pseudo-random number generating unit 12b in response to the clock signal (for example, a clock signal shared with the pseudo-random number generating unit 12a), and when the physical random number output value is "0" the pseudo-random number is not output but is in a state fixed to an output value. Specifically, with this embodiment also, which pseudo-random number is the basis for generating an output state is changed at random using a physical random number, and compared to a conventional physical random number or pseudo-random number it is extremely difficult to predict.

### Fourth Embodiment

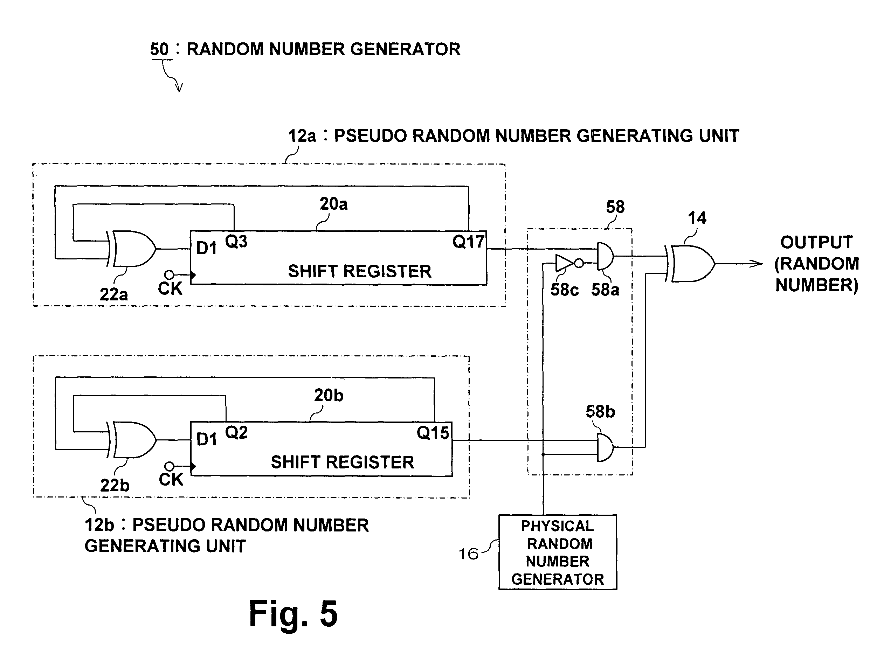

Fig. 5 is a drawing showing the structure of a random number generator 50 of this embodiment. Here, structural elements that are the same as in the above-described embodiment have the same reference numerals, and description of duplicate sections is omitted.

With this embodiment, whether or not pseudo-random numbers respectively generated by the pseudo-random number generating units 12a and 12b are input to the output random number generating unit 14 is switched using a physical random number output value. In the case of the example of Fig. 5, one or other of the pseudo-random numbers generated by the pseudo-random number generating units 12a and 12b is selectively input to the output random number generating unit 14, and a selectively input pseudo-random number constitutes output of the output random number generating unit 14 as is, namely, output of the random number generator 50. That is, with the example of Fig. 5, which of the pseudo-random number patters respectively generated by the plurality of pseudo-random number generators 12a, 12b is output can be selectively switched using a physical random number. Specifically, the switching unit 58 is provided with two AND gates 58a and 58b, with one of the AND gates 58a being input with the output of the pseudo-random number generating unit 12a, and a physical random number output value from the physical random number generator 16 via an inverter 58c, while the other AND gate 58b is input with the output of the pseudo-random number generating unit 12b and a physical random number output value from the physical random number generator 16. Outputs of these AND gates 58a and 58b are then input to the output random number generating unit 14, and an exclusive OR of these outputs becomes the output random number. With this structure, when the physical random number output value is "1", the pseudo-random number generated by the pseudo-random number generating unit 12b is input as is to the output random number generating unit 14 as output of the AND gate 58b, while the output of the other AND gate 58b is "0". Specifically, in this case, an output random number having the same value as the output value of the pseudo-random number generating unit 12b (namely the pseudo-random number output from the pseudo-random number generating unit 12b) is output from the output random number generating unit 14. On the other hand, when the physical random number output value is "0", the pseudo-random number generated by the pseudo-random number generating unit 12a is input as is to the output random number generating unit 14 as output of the AND gate 58a, while the output of the other AND gate 58b is "0". Specifically, in this case, an output random number having the same value as the output value of the pseudo-random number generating unit 12a (namely the pseudo-random number output from the pseudo-random number generating unit 12a) is output from the output random number generating unit 14. With this embodiment also, which pseudo-random number is used to generate an output random number is changed at random using a physical random number, and compared to a conventional physical random number or pseudo-random number it is extremely difficult to predict.

Preferred embodiments of the present invention have been described above, but the present invention is not limited to the above described embodiments and can also be realized using various equivalent circuits. For example, with the above described embodiments, a case has been illustrated where a pseudo-random number is several types of M-sequence code generated by linear shift register code generators having 17 stage or 15 stage shift registers, but this example is not limiting, and it is also possible to have pseudo-random number sequences based on shift registers with a different number of stages or a combination of taps. It is also possible for a plurality of pseudo-random number generating units to generate pseudo-random numbers for the same sequence. With the above described embodiments, a Q output from a flip-flop of the final stage of the shift register is output as the pseudo-random number, but it is also possible to output the pseudo-random number from another flip-flop, or to output a feedback value input to the shift register as the pseudo-random number.

### Industrial Applicability

As has been described above, according to the present invention, since based on which pseudo-random number an output random number is generated is varied at random using a physical random number, it is possible to generate a random number that is more difficult to predict. As a result, for example, it is applicable to use with encryption technology requiring higher margin of safety.

## Claims

1. A random number generator comprising:
a plurality of pseudo-random number generating unit capable of respectively outputting random numbers of a fixed pseudo-random number sequence;
output random number generating unit capable of generating an output random number based on output of the plurality of pseudo-random number generating unit;
physical random number generating unit for generating a physical random number; and
switching unit for, in generation of an output random number in the output random number generating unit, switching whether or not a pseudo-random number generated by at least one of the pseudo-random number generating unit is used based on a physical random number generated by the physical random number generating unit.

2. The random number generator of claim 1, wherein the switching unit switches whether or not a clock signal is input to at least one of the pseudo-random number generating unit based on the physical random number.

3. The random number generator of claim 1, wherein a physical random number generated by the physical random number generating unit is input as a clock signal of at least one of the pseudo-random number generating unit.

4. The random number generator of claim 1, wherein the switching unit switches whether or not a pseudo-random number generated by at least one of the pseudo-random number generating unit is input to the output random number generating unit based on the physical random number.

5. The random number generator of claim 1, wherein the output random number generating unit is an exclusive OR gate.
